# EUROPEAN PATENT APPLICATION

(11) **EP 4 160 420 A1**
(43) Date of publication of application: **05.04.2023**
(21) Application number: 20937335.6
(22) Date of filing: 28.07.2020
(51) Int. Cl.: G06F 11/26, H04W 8/18

(54) **IDENTIFICATION CARD CONVERSION METHOD AND SYSTEM, STORAGE MEDIUM AND TERMINAL DEVICE**

(30) Priority: 28.05.2020 CN 202010466816
(71) Applicant: JRD Communication (Shenzhen) Ltd, Shenzhen, Guangdong 518052 (CN)
(72) Inventor: NIE, Mourong, Shenzhen, Guangdong 518052 (CN); WANG, Yongzhen, Shenzhen, Guangdong 518052 (CN); ZHANG, Xijun, Shenzhen, Guangdong 518052 (CN)
(74) Representative: Keil & Schaafhausen Patentanwälte PartGmbB
(86) International application number: PCT/CN2020/105115
(87) International publication number: WO 2021/237922

(57) **Abstract**

Disclosed in the present application are an identification card conversion method and system, a storage medium and a terminal device. The present application realizes one identification card to simulate identification cards of other operators, thereby eliminating the need to frequently replace the identification card, reducing the software test cost, and improving the software test efficiency.

## Description

This application claims the priority of the Chinese patent application No. 202010466816.9, filed on May 28, 2020, titled "CONVERSION METHOD AND SYSTEM OF IDENTITY MODULE CARD, STORAGE MEDIUM, AND TERMINAL DEVICE", the content of which is incorporated into the present application by reference in its entirety.

### FIELD OF DISCLOSURE

The present application relates to computer technologies, and in particular, to a conversion method and system of an identity module card, a storage medium, and a terminal device.

### BACKGROUND

In processes of software development and testing, it is often encountered that subscriber identity module (abbreviated as SIM, an identity module card described below refers to the subscriber identity module card) cards of different operators are required. For example, when a customer performs a laboratory test, public land mobile network (abbreviated as PLMN) information actually stored in a SIM card is identification information of a designated operator, such as 00101. However, the public land mobile network information of the SIM card that the terminal device needs to use is identification information of other operators (for example, China Mobile 46000).

In the above case, the customer generally directly replaces a SIM card of another operator so that a testing process can continue. However, frequent replacement of the SIM card not only increases a cost of the test, but also causes a device for fixing the SIM card to be damaged due to constant insertion and removal of the SIM card, which brings a lot of inconvenience to the test process.

Accordingly, a new method is needed to solve the problem of replacing the SIM card.

### SUMMARY OF DISCLOSURE

Embodiments of the present application provide a conversion method and system for an identity module card, a storage medium, and a terminal device, which are used to solve the problem of frequent replacement of SIM cards due to inability to simulate SIM cards of different operators in processes of software development and testing.

According to an aspect of the present application, an embodiment of the present application provides a conversion method of an identity module card, which is suitable for a terminal device, and the method includes the following steps: configuring a storage module, where the storage module is configured to store at least one first identification information and second identification information corresponding to the at least one first identification information; detecting whether the identity module card is provided in the terminal device; reading identification information of the identity module card if it is detected that the identity module card is provided in the terminal device, and setting the identification information as third identification information; determining whether there is first identification information that is the same as the third identification information in the at least one first identification information stored by the storage module; reading the second identification information corresponding to the first identification information if it is determined that there is the first identification information that is the same as the third identification information in the at least one first identification information stored by the storage module; and replacing the second identification information with the third identification information.

Furthermore, in the step of configuring the storage module, the method further includes a step of: modifying the at least one first identification information and the second identification information corresponding to the at least one first identification information.

Furthermore, in the step of configuring the storage module, the method further includes a step of: adding at least one first identification information and second identification information corresponding to the at least one first identification information.

Furthermore, in the step of configuring the storage module, the method further includes a step of: deleting at least one first identification information and second identification information corresponding to the at least one first identification information.

According to another aspect of the present application, an embodiment of the present application provides a conversion system of an identity module card, which is suitable for a terminal device, and the system includes: a configuration unit configured to configure a storage module, where the storage module is configured to store at least one first identification information and second identification information corresponding to the at least one first identification information; a detection unit configured to detect whether the identity module card is provided in the terminal device; a first reading unit configured to read identification information of the identity module card if it is detected that the identity module card is provided in the terminal device, and configured to set the identification information as third identification information; a determining unit configured to determining whether there is first identification information that is the same as the third identification information in the at least one first identification information stored by the storage module; a second reading unit configured to read the second identification information corresponding to the first identification information if it is determined that there is the first identification information that is the same as the third identification information in the at least one first identification information stored by the storage module; and a replacement unit configured to replace the second identification information with the third identification information.

Furthermore, the configuration unit includes: a modification unit configured to modify the at least one first identification information and the second identification information corresponding to the at least one first identification information.

Furthermore, the configuration unit includes: an adding unit configured to add at least one first identification information and second identification information corresponding to the at least one first identification information.

Furthermore, the configuration unit includes: a deletion unit configured to delete at least one first identification information and second identification information corresponding to the at least one first identification information.

According to another aspect of the present application, an embodiment of the present application provides a storage medium storing a plurality of instructions therein. The instructions are adapted to be loaded by a processor to execute the above-mentioned conversion method of the identity module card.

According to another aspect of the present application, an embodiment of the present application provides a terminal device, including a processor and a storage. The processor is electrically connected to the storage, the storage is configured to store instructions and data, and the processor is configured to execute steps of the above-mentioned conversion method of the identity module card.

Advantages of the present application are that, compared with the prior art, the present application stores the first identification information and the second identification information corresponding to the first identification information in the storage module. When it is detected that the identity module card is installed in the terminal device, the identification information of the identity module card is read as the third identification information, and the second identification information is replaced with the third identification information. In the present application, one identity module card is used to simulate identity module cards of other operators through the above operations, so that the identity module card does not need to be replaced frequently, a cost of software testing is reduced, and an efficiency of the software testing is improved.

### BRIEF DESCRIPTION OF DRAWINGS

In order to illustrate the technical solutions in the embodiments of the present application more clearly, the following briefly introduces the accompanying drawings that are used in the description of the embodiments. Obviously, the drawings in the following description are only some embodiments of the present application. For those skilled in the art, other drawings can also be obtained from these drawings without creative efforts.
FIG. 1 is a flowchart of steps of a conversion method of an identity module card provided by an embodiment of the present application.
FIG. 2 is a flowchart of sub-steps of step S110.
FIG. 3 is a schematic structural diagram of a conversion system of an identity module card according to an embodiment of the present application.
FIG. 4 is a schematic structural diagram of a terminal device provided by an embodiment of the present application.
FIG. 5 is another schematic structural diagram of a terminal device provided by an embodiment of the present application.

### DETAILED DESCRIPTION

The technical solutions in the embodiments of the present application will be clearly and completely described below with reference to the accompanying drawings in the embodiments of the present application. Obviously, the described embodiments are only a part of the embodiments of the present application, but not all of the embodiments. Based on the embodiments in this application, all other embodiments obtained by those skilled in the art without creative efforts fall within the scope of protection of this application.

In the description of the present application, it should be understood that directions or location relationships indicated by terms "center", "longitudinal", "landscape", "length", "width", "thickness", "upper", "lower", "front", "rear", "left", "right", "vertical", "horizontal", "top", "bottom", "inner", "outer", "clockwise", and "counterclockwise" are directions or location relationships shown based on the accompanying drawings, are merely used for the convenience of describing the present application and simplifying the description, but are not used to indicate or imply that a device or an element must have a particular direction or must be constructed and operated in a particular direction, and therefore, cannot be understood as a limitation to the present application. In addition, terms "first" and "second" are merely used to describe the objective, but cannot be understood as indicating or implying relative importance or implying a quantity of indicated technical features. Therefore, features limited by "first" and "second" may indicate explicitly or implicitly that one or more features are included. In the description of the present application, unless otherwise specifically limited, "multiple" means two or more.

In the present application, it should be noted that, unless otherwise clearly stipulated and limited, terms "mount", "connect", and "fix" should be understood in a generalized manner, for example, may be understood as fixed connection, detachable connection, or integration; or may be understood as mechanical connection, electrical connection, or mutual communication; or may be understood as direct connection, or indirect connection with a medium, or internal communication of two elements or a mutual relationship between two elements. A person of ordinary skill in the art may understand specific meanings of the terms in the present application according to specific situations. In this embodiment, a simulated display screen touch unit is connected to a head tracking unit, and is used for acquiring a movement path of a sensing cursor in a display device.

In the present application, unless otherwise clearly stipulated and limited, that a first feature is "above" or "below" a second feature may include that the first feature directly contacts the second feature, or may include that the first feature does not contact the second feature directly but contacts the second feature with another feature between them. In addition, that the first feature is "above" the second feature includes that the first feature is right above the second feature and obliquely above the second feature, or merely represents that a horizontal height of the first feature is higher than that of the second feature. The first feature is "below" the second feature includes that the first feature is right below the second feature or obliquely below the second feature, or merely represents that a horizontal height of the first feature is lower than that of the second feature.

The following disclosure provides many different embodiments or examples for implementing different structures of the present application. To simplify the disclosure of the present application, the components and arrangements of specific examples are described below. Apparently, they are only examples and are not intended to limit the application. Furthermore, this application may repeat reference numerals and/or reference letters in different embodiments for the purpose of simplicity and clarity, and does not in itself indicate a relationship between the various embodiments and/or arrangements discussed. In addition, this application provides examples of various specific processes and materials, but one of ordinary skill in the art will know the application of other processes and/or the use of other materials.

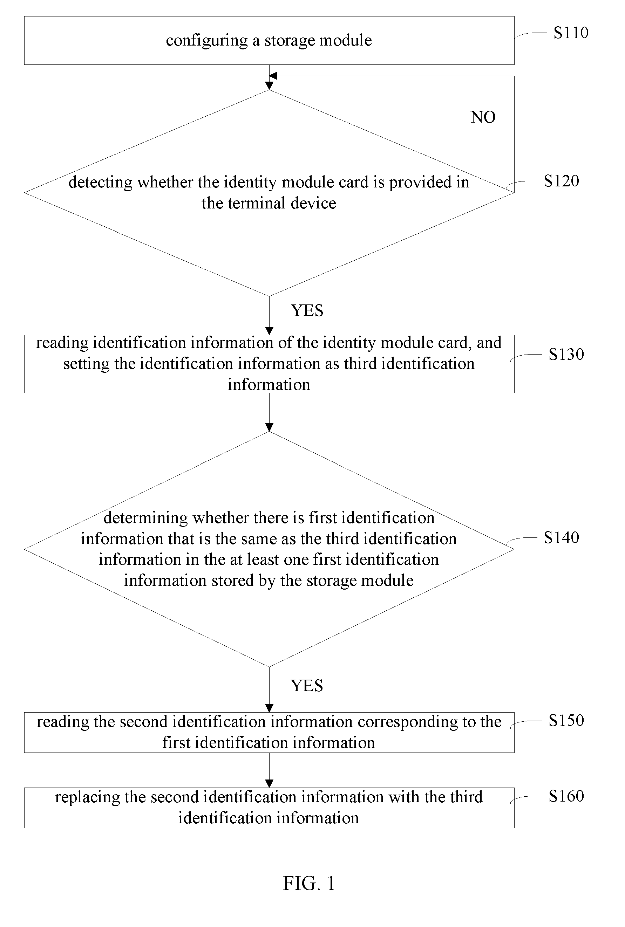

As shown in FIG. 1, which is a flowchart of steps of a conversion method of an identity module card provided by an embodiment of the present application, including the following steps:
Step S110: a storage module is configured.

In the embodiment of the present application, the storage module is configured to store at least one first identification information and second identification information corresponding to the at least one first identification information. The first identification information and the second identification information are both public land mobile network (PLMN) of the identity module card. The storage module is disposed inside a terminal device, but not limited to this. The storage module can also be disposed outside the terminal device, and is connected to the terminal device through a data line to read the information of the storage module.

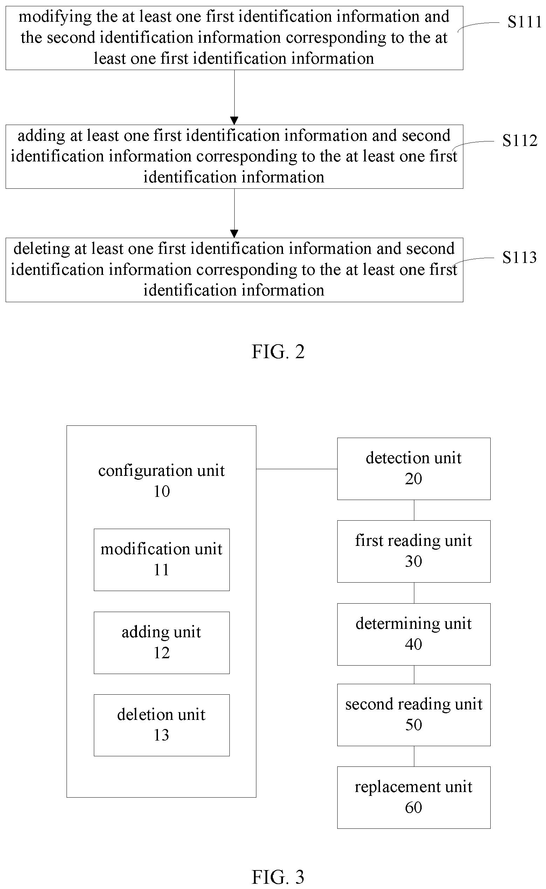

As shown in FIG. 2, which is a flowchart of sub-steps of the step S110.

Step S111: the at least one first identification information and the second identification information corresponding to the at least one first identification information are modified.

Step S112: at least one first identification information and second identification information corresponding to the at least one first identification information are added.

Step S113: at least one first identification information and second identification information corresponding to the at least one first identification information are deleted.

In the embodiment of the present application, through the implementation of the step S111, the step S112, and the step S113, it is convenient for a user to view each PLMN replacement record, and can also modify, delete, add, etc. information recorded in the storage module.

Step S120: it is detected that whether the identity module card is provided in the terminal device.

Step S130: identification information of the identity module card is read, and the identification information is set as third identification information.

In the embodiment of the present application, when it is detected that the identity module card is installed in the terminal device, the identification information of the identity module card is read, and the identification information is set as third identification information. The third identification information is public land mobile network (PLMN) information of the identity module card.

Step S140: it is determined that whether there is the first identification information that is the same as the third identification information in the at least one first identification information stored by the storage module.

In the embodiment of the present application, the terminal device reads each piece of first identification information in the storage module, and compares the read third identification information with the first identification information.

Step S150: the second identification information corresponding to the first identification information is read.

In the embodiment of the present application, if it is determined that there is the first identification information that is the same as the third identification information in the at least one first identification information stored by the storage module, the second identification information corresponding to the first identification information is read.

Step S160: the second identification information is replaced with the third identification information.

In the embodiment of the present application, through the operation of the step S160, one identity module card can be used to simulate identity module cards of other operators, so that the identity module card does not need to be replaced frequently, a cost of software testing is reduced, and an efficiency of the software testing is improved.

Advantages of the present application are that, compared with the prior art, the present application stores the first identification information and the second identification information corresponding to the first identification information in the storage module. When it is detected that the identity module card is installed in the terminal device, the identification information of the identity module card is read as the third identification information, and the second identification information is replaced with the third identification information. In the present application, one identity module card is used to simulate identity module cards of other operators through the above operations, so that the identity module card does not need to be replaced frequently, the cost of software testing is reduced, and the efficiency of the software testing is improved.

As shown in FIG. 3, which is a schematic structural diagram of a conversion system of an identity module card provided by an embodiment of the present application, the system includes: a configuration unit 10, a detection unit 20, a first reading unit 30, a determining unit 40, a second reading unit 50, and a replacement unit 60.

The configuration unit 10 is configured to configure a storage module. In the embodiment of the present application, the storage module is configured to store at least one first identification information and second identification information corresponding to the at least one first identification information. The first identification information and the second identification information are both public land mobile network (PLMN) information of the identity module card. The storage module is disposed inside the terminal device, but not limited to this. The storage module can also be disposed outside the terminal device, and is connected to the terminal device through a data line to read the information of the storage module.

The configuration unit 10 includes a modification unit 11, an adding unit 12, and a deletion unit 13.

The modification unit 11 is configured to modifying the at least one first identification information and the second identification information corresponding to the at least one first identification information. The adding unit 12 is configured to add at least one first identification information and second identification information corresponding to the at least one first identification information. The deletion unit 13 is configured to delete at least one first identification information and second identification information corresponding to the at least one first identification information. In the embodiment of the present application, the modification unit 11, the adding unit 12, and the deletion unit 13 are used to facilitate the user to view each PLMN replacement record, and the user can also modify, delete, add, etc. information recorded in the storage module.

The detection unit 20 is configured to detect whether the identity module card is provided in the terminal device.

The first reading unit 30 is configured to read the identification information of the identity module card, and set the identification information as third identification information. In the embodiment of the present application, when it is detected that the identity module card is installed in the terminal device, the identification information of the identity module card is read, and the identification information is set as third identification information. The third identification information is the public land mobile network (PLMN) information of the identity module card.

The determining unit 40 is configured to determine whether there is first identification information that is the same as the third identification information in the at least one first identification information stored by the storage module. In the embodiment of the present application, the terminal device reads each piece of first identification information in the storage module, and compares the read third identification information with the first identification information.

The second reading unit 50 is configured to read the second identification information corresponding to the first identification information. In the embodiment of the present application, if it is determined that there is the first identification information that is the same as the third identification information in the at least one first identification information stored by the storage module, the second identification information corresponding to the first identification information is read.

The replacement unit 60 is configured to replace the second identification information with the third identification information. In the embodiment of the present application, through the replacement unit 60, one identity module card can be used to simulate identity module cards of other operators, so that the identity module card does not need to be replaced frequently, a cost of software testing is reduced, and an efficiency of the software testing is improved.

Advantages of the present application are that, compared with the prior art, the present application stores the first identification information and the second identification information corresponding to the first identification information in the storage module. When it is detected that the identity module card is installed in the terminal device, the identification information of the identity module card is read as the third identification information, and the second identification information is replaced with the third identification information. In the present application, one identity module card is used to simulate identity module cards of other operators through the above operations, so that the identity module card does not need to be replaced frequently, the cost of software testing is reduced, and the efficiency of the software testing is improved.

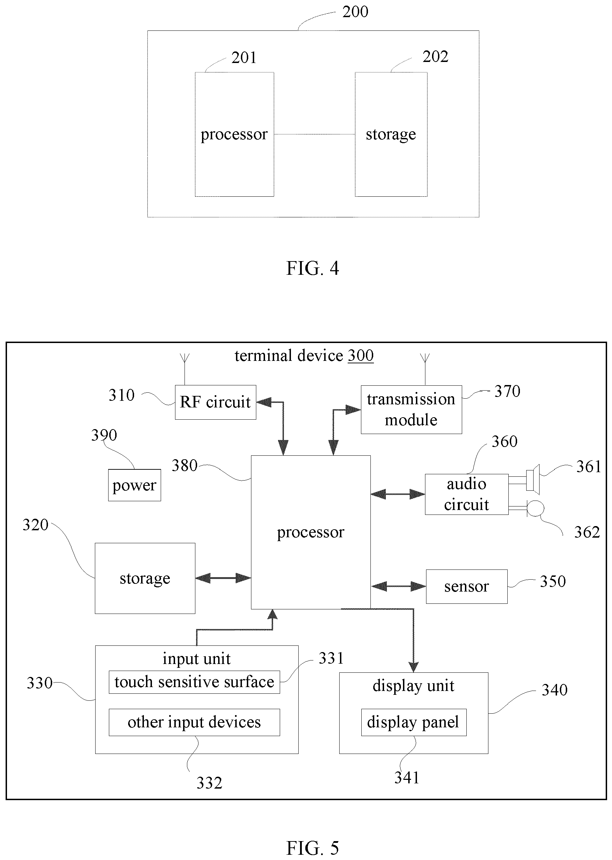

In addition, an embodiment of the present invention further provides a terminal device, where the terminal device may be a device such as a smart phone, a tablet computer, or the like. Specifically, as shown in FIG. 4, a terminal device 200 includes a processor 201 and a storage 202, and the processor 201 is electrically connected with the storage 202.

The processor 201 is a control center of the terminal device 200, and uses various interfaces and lines to connect all parts of the entire terminal device. By running or executing the software program and/or the application module that are/is stored in the storage 202 and invoking data stored in the storage 202, the processor 201 performs various functions and data processing of the server, so as to perform overall monitoring on the terminal device.

In this embodiment, the terminal device 200 has multiple storage sections. The storage sections include a system section and a target section. The processor 201 of the terminal device 200 could load the instructions of one or more applications to the storage 202 and execute the applications stored in the storage 202 to perform all kinds of functions according to steps of:
configuring a storage module, where the storage module is configured to store at least one first identification information and second identification information corresponding to the at least one first identification information;
detecting whether the identity module card is provided in the terminal device;
reading identification information of the identity module card if it is detected that the identity module card is provided in the terminal device, and setting the identification information as third identification information;
determining whether there is first identification information that is the same as the third identification information in the at least one first identification information stored by the storage module;
reading the second identification information corresponding to the first identification information if it is determined that there is the first identification information that is the same as the third identification information in the at least one first identification information stored by the storage module; and
replacing the second identification information with the third identification information.

FIG. 5 shows a specific structural block diagram of a terminal device provided by an embodiment of the present application, and the terminal device can be used to implement the conversion method of the identity module card provided in the above embodiment. The terminal device 300 can be a smartphone or a tablet. Furthermore, the terminal device may further include the following components. A RF circuit 310 is configured to receive and send electromagnetic waves, and transform the electromagnetic waves to electric signals or transform the electric signals to the electromagnetic waves, for the communication with a communicating network or other devices. The RF circuit 310 includes various known circuit elements for performing these functions, such as an antenna, an RF transceiver, a digit signal processor, an encryption/decryption chip, a subscriber identity module (SIM) card, and a storage. The RF circuit 310 can communicate with various networks, such as the Internet, an enterprise intranet, or a wireless network, or communicate with other devices via the wireless network. The wireless network may be a cellular phone network, a wireless local-area network, or a metropolitan area network. The wireless network can adopt various communication standards, protocols, and technology, including but being not limited to Global System for Mobile Communication (GSM), Enhanced Data GSM Environment (EDGE), wideband code division multiple access (W-CDMA), Code division access (CDMA), time division multiple access (TDMA), Bluetooth, Wireless Fidelity (WiFi) (such as Institute of Electrical and Electronics Engineers (IEEE) 802.11a, IEEE 802.11b, IEEE 802.11g and/or IEEE 802.11n), a Voice over Internet Protocol (VoIP), Worldwide Interoperability for Microwave Access (Wi-Max), other protocols used for email, instant message, and short message, or other suitable communication protocols, and even including future protocols.

A storage 320 can be used to store software programs and modules, such as the program instructions/modules corresponding to the conversion method of the identity module card in the above-mentioned embodiments. The processor 380 executes the software programs and modules stored in the storage 320, thus performing various functional applications and data processing, that is, implementing the function of converting the identity module card. The storage 320 may include a high-speed random-access storage and may also include a non-volatile storage, such as one or more magnetic storage apparatuses, a flash memory, or other non-volatile solid-state memories. In some examples, the storage 320 may further include storages placed remote to the processor 380. These remote storages may be connected to the terminal device 300 over a network. Examples of the network include, but are not limited to, the Internet, an intranet, a local area network, a mobile communication network, and a combination thereof.

An input unit 303 may be configured to receive inputted figures or character information and generate a keyboard, mouse, operating leveler, optical or trackball signal input related to user settings and function control. In a specific embodiment, the input unit 303 may include a touch sensitive surface 331 and some other input devices 332. The touch sensitive surface 331, also called a touch screen or a touch panel, may collect an operation thereon or nearby (for example, an operation of a user with any applicable object or accessory such as a finger or a touch pen on the touch sensitive surface 331 or near the touch sensitive surface 331) and drive a corresponding connection device according to a preset procedure. Alternatively, the touch sensitive surface 331 may include a touch detecting apparatus and a touch controller. The touch detecting apparatus detects a position of a touch operation by a user and a signal brought in by the touch operation, and sends the signal to the touch controller. The touch controller receives touch information from the touch detecting apparatus, converts the touch information into the coordinates of a touch point, sends the coordinates of the touch point to the processor 308, and receives and executes commands from the processor 308. Moreover, the touch sensitive surface 331 may be a resistive, capacitive touch, infrared touch or surface acoustic wave touch sensitive surface 331. In addition to the touch sensitive surface 331, the input unit 303 may further include other input devices 332. The other input devices 332 may include, but are not limited to, one or more of a physical keyboard, a functional button (such as a volume control button or a switch button), a trackball, a mouse, and an operating lever.

A display unit 340 may be configured to display information inputted by the user or provided for the user, and various graphic user interfaces of the terminal, where the graphic user interfaces may include images, texts, icons, videos, and arbitrary combinations thereof. The display unit 340 may include a display panel 341, which, optionally, may be configured in the form of liquid crystal display (LCD) or organic light-emitting diode (OLED). Furthermore, the display panel 341 may be covered by the touch sensitive surface 331. After detecting a touch operation thereon or nearby, the touch sensitive surface 331 sends the touch operation to the processor 308 to determine a type of the touch event, and then the processor 308 provides a corresponding visual output on the display panel 341 according to the type of the touch event. In FIG. 5, although the touch sensitive surface 331 and the display panel 341 realize input and output functions as two independent components, the touch sensitive surface 331 and the display panel 341 may be integrated together to realize the input and output functions in some embodiments.

The terminal device 300 may further include at least one sensor 350, such as a light sensor, a motion sensor, and any other sensor. Specifically, the light sensor may include an environmental light sensor and a proximity sensor. The environmental light sensor can adjust a lightness of the display panel 341 depending on a brightness of environmental light, and the proximity sensor can turn off at least one of the display panel 341 and a backlight of the display panel when the terminal device 300 is moved close to an ear. As one kind of the motion sensor, an accelerometer sensor can detect values of accelerations in various directions (generally in three axes), and detect a value and a direction of gravity when being motionless, which can be applied to applications of recognizing a gesture of a cellphone (such as switching between landscape mode and portrait mode, related games and magnetometer calibration) and related functions of vibration recognition (such as a pedometer and a knock). Other sensors may be included in the terminal device 300, such as a gyroscope, a barometer, a hygrometer, a thermometer and an infrared sensor, the details of which are omitted.

An audio circuit 360, a loudspeaker 361, and a microphone 362 can provide an audio interface between a user and the terminal device 300. The audio circuit 360 can transmit an electrical signal converted from received audio data to the loudspeaker 361, and the loudspeaker 361 converts the electrical signal into an acoustical signal and outputs the acoustical signal. On the other hand, the microphone 362 converts a collected acoustical signal into an electrical signal; the audio circuit 360 receives the electrical signal, converts the electrical signal into audio data and sends the audio data to the processor 380. After processing the audio data, the processor 380 sends, via the RF circuit 310, the audio data as processed to another terminal or outputs the audio data to the storage 320 for further processing. The audio circuit 360 may further include a headset jack, to provide communications between an external headset and the terminal device 300.

The terminal device 300 may help, by using a transmission module 370 (e.g., a WiFi module), the user to receive and send an email, browse a web page, visit streaming media, and the like. The transmission module 370 provides wireless broadband Internet access to the user. Although the transmission module 370 is shown in FIG. 5, it may be understood that the transmission module 370 is not a mandatory component of the terminal device 300, and may be omitted according to a requirement without changing the essence of the present invention.

The processor 380 is a control center of the terminal device 300, is connected to each part of the entire mobile phone by using various interfaces and lines, and by running or executing the software program or the software module or both that is stored in the storage 320 and by invoking data stored in the storage 320, performs various functions of the terminal device 300 and data processing, so as to perform overall monitoring on the mobile phone. Alternatively, the processor 380 may include one or more processing cores. In some embodiments, an application processor and a modulation and demodulation processor may be integrated into the processor 380. The application processor mainly processes an operating system, a user interface, an application program, and the like, and the modulation and demodulation processor mainly processes wireless communication. It may be understood that the modulation and demodulation processor may not be integrated into the processor 380.

The terminal device 300 further includes a power 390 (such as a battery) that supplies power to each component. In some embodiments, the power may be logically connected to the processor 380 by using a power management system, so as to implement a management function such as charging, discharging, and power consumption by using the power management system. The power 390 may also include one or more DC or AC power, recharging systems, power fault detection circuits, power converters or inverters, power status indicators, and any other components.

Although not shown, the terminal device 300 may also include a camera (e.g., a front camera, a rear camera), a Bluetooth module, and the like, which will not be repeated here. Specifically, in this embodiment, the display unit of the terminal device is a touch screen display, and the terminal device further includes a storage and one or more programs. The one or more programs are stored in the storage and configured to be executed by the one or more processors. The one or more programs include instructions for:
configuring a storage module, where the storage module is configured to store at least one first identification information and second identification information corresponding to the at least one first identification information;
detecting whether the identity module card is provided in the terminal device;
reading identification information of the identity module card if it is detected that the identity module card is provided in the terminal device, and setting the identification information as third identification information;
determining whether there is first identification information that is the same as the third identification information in the at least one first identification information stored by the storage module;
reading the second identification information corresponding to the first identification information if it is determined that there is the first identification information that is the same as the third identification information in the at least one first identification information stored by the storage module; and
replacing the second identification information with the third identification information.

During specific implementation, each of the above modules can be implemented as independent entities, or can be arbitrarily combined to be implemented as the same or several entities. For the specific implementation of the above modules, reference may be made to the foregoing method embodiments, which will not be repeated here.

Those of ordinary skill in the art can understand that all or part of the steps in the various methods of the above embodiments may be completed by instructions, or by instructions to control related hardware. The instructions may be stored in a computer-readable storage medium and loaded and executed by the processor.

Therefore, an embodiment of the present application provides a storage medium in which multiple instructions are stored. The instruction can be loaded by the processor to execute the steps in the conversion method of the identity module card provided by any one of the embodiments of this application.

The storage medium may include: read only memory (ROM), random access memory (RAM), magnetic disk or optical disk, and the like.

The instructions stored in the storage medium can execute the steps in the conversion method of the identity module card provided by any one of the embodiments of this application. Therefore, the advantages that can be achieved by the conversion method of the identity module card provided by any one of the embodiments of the present application can be achieved. For details, reference may be made to the foregoing embodiments, and details are not described herein again.

In the above-mentioned embodiments, the description of each embodiment has its own emphasis. For parts that are not described in detail in a certain embodiment, reference may be made to the relevant descriptions of other embodiments.

Specific examples are used herein to illustrate the principles and implementations of the present application. The descriptions of the above embodiments are only used to help understand the technical solutions and core ideas of the present application. Those of ordinary skill in the art should understand that they can still make modifications to the technical solutions described in the foregoing embodiments, or perform equivalent replacements to some of the technical features. These modifications or replacements not make the essence of the corresponding technical solutions deviate from the scope of the technical solutions of the embodiments of the present application.

## Claims

1. A conversion method of an identity module card, suitable for a terminal device, wherein the conversion method of the identity module card comprises steps of:
configuring a storage module, wherein the storage module is configured to store at least one first identification information and second identification information corresponding to the at least one first identification information;
detecting whether the identity module card is provided in the terminal device;
reading identification information of the identity module card if it is detected that the identity module card is provided in the terminal device, and setting the identification information as third identification information;
determining whether there is first identification information that is the same as the third identification information in the at least one first identification information stored by the storage module;
reading the second identification information corresponding to the first identification information if it is determined that there is the first identification information that is the same as the third identification information in the at least one first identification information stored by the storage module; and
replacing the second identification information with the third identification information.

2. The conversion method of the identity module card according to claim 1, wherein in the step of configuring the storage module, the method further comprises a step of:
modifying the at least one first identification information and the second identification information corresponding to the at least one first identification information.

3. The conversion method of the identity module card according to claim 1, wherein in the step of configuring the storage module, the method further comprises a step of:
adding at least one first identification information and second identification information corresponding to the at least one first identification information.

4. The conversion method of the identity module card according to claim 1, wherein in the step of configuring the storage module, the method further comprises a step of:
deleting at least one first identification information and second identification information corresponding to the at least one first identification information.

5. A conversion system of an identity module card, suitable for a terminal device, wherein the conversion system of the identity module card comprises:
a configuration unit configured to configure a storage module, wherein the storage module is configured to store at least one first identification information and second identification information corresponding to the at least one first identification information;
a detection unit configured to detect whether the identity module card is provided in the terminal device;
a first reading unit configured to read identification information of the identity module card if it is detected that the identity module card is provided in the terminal device, and configured to set the identification information as third identification information;
a determining unit configured to determining whether there is first identification information that is the same as the third identification information in the at least one first identification information stored by the storage module;
a second reading unit configured to read the second identification information corresponding to the first identification information if it is determined that there is the first identification information that is the same as the third identification information in the at least one first identification information stored by the storage module; and
a replacement unit configured to replace the second identification information with the third identification information.

6. The conversion system of the identity module card according to claim 5, wherein the configuration unit comprises:
a modification unit configured to modify the at least one first identification information and the second identification information corresponding to the at least one first identification information.

7. The conversion system of the identity module card according to claim 6, wherein the configuration unit comprises:
an adding unit configured to add at least one first identification information and second identification information corresponding to the at least one first identification information.

8. The conversion system of the identity module card according to claim 6, wherein the configuration unit comprises:
a deletion unit configured to delete at least one first identification information and second identification information corresponding to the at least one first identification information.

9. A storage medium storing a plurality of instructions therein, wherein the instructions are adapted to be loaded by a processor to execute the conversion method of the identity module card according to claim 1.

10. A terminal device, comprising a processor and a storage, wherein the processor is electrically connected to the storage, the storage is configured to store instructions and data, and the processor is configured to execute steps of the conversion method of the identity module card according to claim 1.
